# EUROPEAN PATENT SPECIFICATION

(11) **EP 1 596 619 B1**
(45) Date of publication and mention of the grant of the patent: **14.02.2007**
(21) Application number: 04011421.7
(22) Date of filing: 13.05.2004
(51) Int. Cl.: H04Q 7/38

(54) **A device for receiving a locationing request**
Vorrichtung für Empfang von Positionsanforderungen
Dispositif pour la reception des demandes de localisation

(43) Date of publication of application: 16.11.2005
(73) Proprietor: SIEMENS AKTIENGESELLSCHAFT, 80333 München (DE)
(72) Inventor: El Ghouti, Norddin, 9000 Aalborg (DK)

(56) References cited:
- WO-A-03/037026
- US-A- 5 590 396
- US-A1- 2004 081 139
- "GSM 04.08 version 7.8.0 Release 1998" ETSI TS 100 940 V7.8.0, XX, XX, 1 October 2000 (2000-10-01), pages 135,376-378, XP002204206

## Description

### Field of the invention

The invention relates to handling of information derived from measurements performed at a mobile equipment for finding the location of the mobile equipment in a cellular network,.

### Background of the invention

US 2004/0081139 A1 discloses a system for determining the location of a mobile telecommunications device. The position of the device is determined prior to sending of the call. The current position of the mobile telecommunication device is forwarded by the device to the control center for the transmitter installation. This then relays the position directly to the location service call client, such as the fire department.

WO 03/037026 discloses a system for univocally identifying a mobile subscriber during an emergency call performed by a mobile phone without a SIM card or with an unvalid SIM card, to determine its updated geographic position. In messages of the positioning procedure, international mobile equipment identity IMEI is used to univocally discriminate the subscribers to be positioned during an emergency call in case they have the same non-dialable call back number, said international mobile equipment identity IMEI being made mandatory in said messages when both international mobile subscriber identy IMSI and mobile subscriber ISDN number MSISDN are not available as dialable call back number.

US 5,590,396 discloses a method and apparatus for extending the battery life of a cellular radiotelephone. A cellular radiotelephone is conditioned to operate in a pager-only mode wherein the radiotelephone may receive short messages from a base station while conserving battery life by cyclically adopting a deep-sleep state. The base station is notified by the radiotelephone before the radiotelephone enters the deep-sleep state that the radiotelephone is unable to receive messages. After a period of time, the radiotelephone wakes-up, re-establishes contact with the base station and notifies the base station that the radiotelephone is ready to receive messages. After receipt of any messages the radiotelephone repeats the process.

### Summary of the invention

The invention is characterized by a system as set out in claim 1.

### Advantages of the invention

A system for receiving a location request comprising an identifier identifying the device from which the location request originates comprises means adapted to select a network element responsively to said identifier, and to send information derived from the derived location to the selected network element.

If one or two fields of the identifier identifying the device making the locationing request or the subscriber module therein are used to select the network element, a clear advantage is that locationing requests from devices that are unknown or not registered in the network can be handled in a reasonable manner. In this manner, the user is not necessarily limited to the cellular network of his or her own network operator. Furthermore, no roaming agreements etc. are necessary for enabling the locationing.

If said identifier is an International Mobile Equipment Identifier (IMEI), the address to which the location information is sent can be selected based on a device manufacturer or device type or both. This enables the manufacturers of the devices (e.g. manufacturers of mobile equipment) to collect the location data. A person can then be located by making a proper inquiry to the manufacturer database. An advantage of this solution that it enables a truly internationally working collection of subscriber location information.

If said identifier is an International Mobile Subscriber Identifier (IMSI), the address to which the location information is sent can be selected based on the country of the subscriber or the operator identity or both. This enables a country's authorities or cellular network operators to collect the location data. A person can then be located by making a proper inquiry to the authority or operator's database. An advantage of the use of the national code is that in this manner an operator-independent solution can be achieved.

### List of Figures

In the following the invention is described in more detail with reference to examples in the accompanying drawings in Figures 1 to 4, of which:
- Figure 1: illustrates a simplified cellular network;
- Figure 2A: is a simplified block diagram of a device for making a locationing request;
- Figure 2B: is a simplified block diagram of a system for receiving a locationing request;
- Figure 2C: is a signalling diagram illustrating some steps performed by the device for making a locationing request and by the device for receiving a locationing request;
- Figure 3: shows examples of timing signals and time of arrival related thereto; and
- Figure 4: illustrates how the deep-sleep state can be deactivated and activated repetitively.

Same reference numerals refer to similar structural elements throughout the Figures.

### Detailed description of the invention

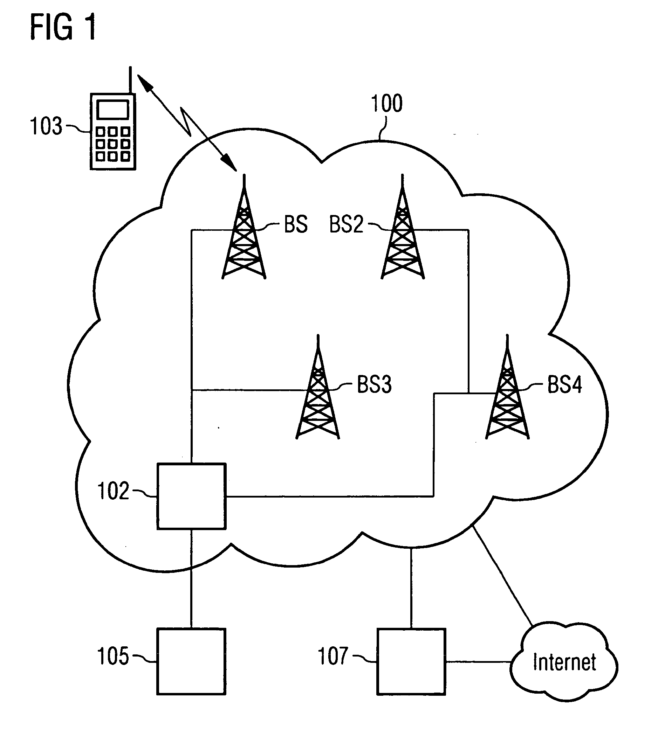

Figure 1 illustrates a simplified cellular network 100. A mobile equipment 103 communicates wirelessly with the cellular network 100 via at least one base station BS, typically using microwave communications means. Normally, a cellular network 100 comprises a plurality of base stations BS, BS2, BS3, BS4. Base stations BS, BS2, BS3, ... are usually controlled by at least one Radio Network Controller 102.

Some examples of the various technical implementation for a cellular network 100 include any network in conformity with one or more of the following network types GSM, GPRS, UMTS, CDMA, or Wideband CDMA.

The cellular network 100 comprises also a system for receiving locationing requests, such as a Locationing Services Centre 105.

The cellular network 100 may be connected to the Internet, to which a network element 107, such as a server, is connected. It is also possible to connect the network element 107 directly to the cellular network 100.

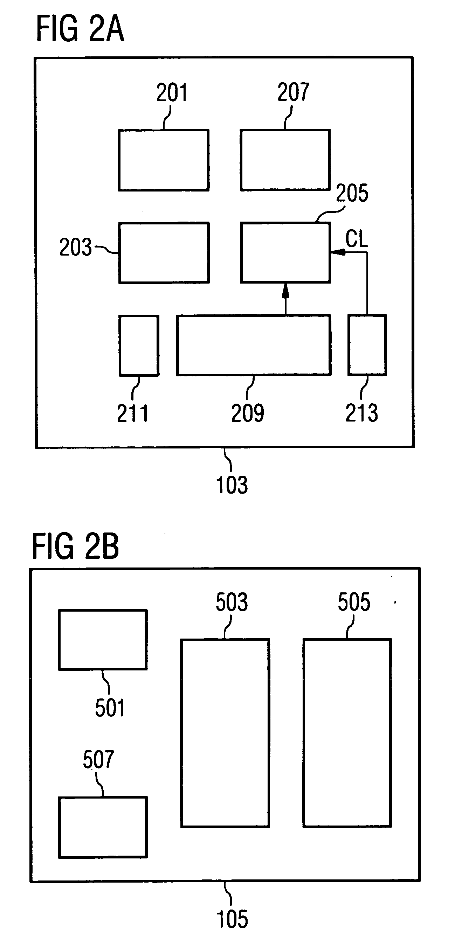

Figure 2A is a simplified block diagram of a device for making a locationing request that in this example is a mobile equipment 103. The mobile equipment 103 comprises receiving means 201 and transmitting means 207. Typically the receiving means 201 and transmitting means 207 include a suitable antenna, transmitter or receiver, impedance matches, amplifiers and so forth, which as such are well known in the art. The mobile equipment 103 is powered by a power supply 213, such as a rechargeable battery. The processor 205 of the mobile equipment 103 gets its operating power from the power supply like the receiving means 201 and transmitting means 207. The processor 205 is able to control the receiving means 201 and transmitting means 207, and data transmitted or received can be passed through the processor 205.

The processor 205 has usually dedicated control lines to control each component, or it is interconnected to other components through a messaging bus.

The mobile equipment 103 further comprises at least one timer, such as an oscillator. This timer is needed to give the operating frequency for the processor 205. The same timer may be used for running the receiving means 201 and transmitting means 207 if no separate timer is needed.

Means 209 for waking up the mobile equipment 103 from a deep-sleep state are adapted to start the processor 205 executing a specific code of software. Principles and means 209 for waking up the mobile equipment 103 as presented in US patent 5,590,396 can be used to implement the deep-sleep state and the wake-up mechanism.

A subscriber module 211, especially a smart card, usually referred to as Subscriber Identity Module or User Identity Module, usually comprises means for obtaining communications security between the mobile equipment 103 and the communications network 100. The subscriber module 211 further comprises an identifier identifying the subscriber module 211. In some implementations this identifier is called International Mobile Subscriber Identifier (IMSI).

The mobile equipment 103 furthermore comprises a register 203 such as a memory for storing some applications and other information. For example, the serial number of the device, or a similar identifier, identifying the mobile equipment 103 can be stored in the register 203. An example of such an identifier is the International Mobile Equipment Identity (IMEI).

Figure 2B is a simplified block diagram of a system for receiving a locationing request. An example of such a system is Locationing Services Centre LCS 105. The LCS 105 comprises receiving means 501 and transmitting means 507. In practice the receiving means 501 and the transmitting means 507 can be adapted to receive or transmit data using the Internet Protocol.

The receiving means 501 are adapted to receive a locationing request REQ comprising information MEAS derived from at least two time of arrival T1; T2; T3 measurements performed in a mobile equipment 103 for making a locationing request REQ. Furthermore, the locationing request REQ comprises an identifier, such as IMEI or IMSI, identifying the device 103 making the locationing request REQ or a subscriber module 211 therein.

Furthermore, the LCS 105 comprises means 503 for determining the geographical location COORD of the mobile equipment 103 making the locationing request REQ. The means 503 for determining the geographical location COORD are adapted to use pre-stored information about the Radio Access Network of the cellular network 100 in order to find the locations of each of the base stations BS, BS2, BS3, ... measured by the mobile equipment 103.

The LCS further comprises means 505 for selecting a network element 107 responsively to the identifier identifying the device 103 making the locationing request REQ or the subscriber module 211 therein.

The transmitting means 507 are adapted to forward information derived from the determined geographical location COORD to the selected network element 107.

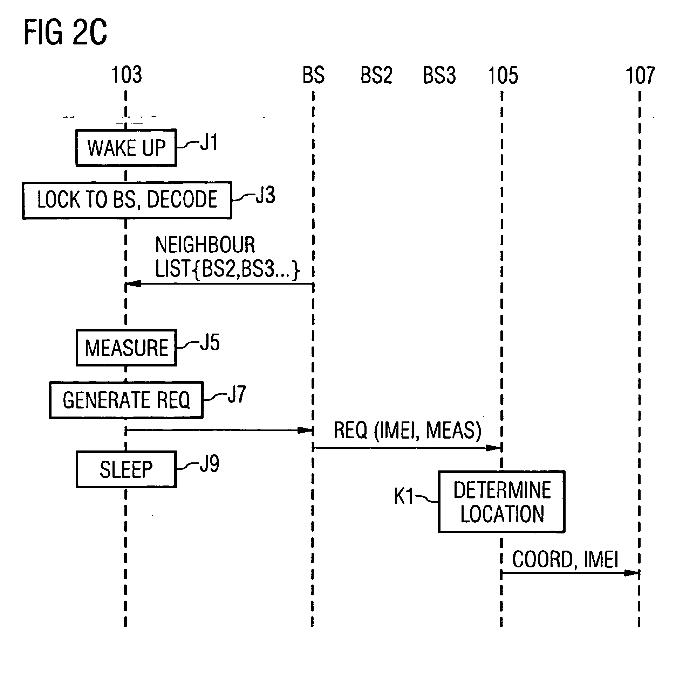

Figure 2C is a signalling diagram illustrating some steps performed by the mobile equipment 103 and the LCS 105. In the following example, a terminal device usable in a GSM network can be used as mobile equipment 103. For devices suitable for using in another network, similar steps are performed but the actual names and functions of available channels may be different.

In step J1 the means 209 for waking up the mobile equipment 103 wakes up the processor 205 from a deep-sleep state.

In step J3 the mobile equipment 103 receives via its receiving means 201 information on available Base Stations by following a Broadcast Control Channel BCCH. The processor 205 selects one Base Station BS having a high signal strength, and locks the receiving means 201 to it. The processor 205 starts to decode the BCCH channel that is broadcast by the BS in order to find a neighbour list of the cell covered by BS.

The neighbour list comprises identities {BS2, BS3, ...} of neighbouring base stations BS2, BS3, and so forth. The size of the neighbour list is immaterial for understanding the invention, but of practical reasons a mobile equipment 103 running in a cellular network 100 usually is able to measure the signal strength for six strongest channels only, therefore the neighbour list rarely comprising more than six neighbour cells.

In step J5 the processor 205 of the mobile equipment 103 records the time of arrival T for a timing signal *ts* broadcast by base station BS the mobile equipment 103 is locked to, and stores it to register 203. The same is repeated for other base stations BS2, BS3, BS3, and so forth, the identities {BS2, BS3, ---} of which were comprised in the neighbour list.

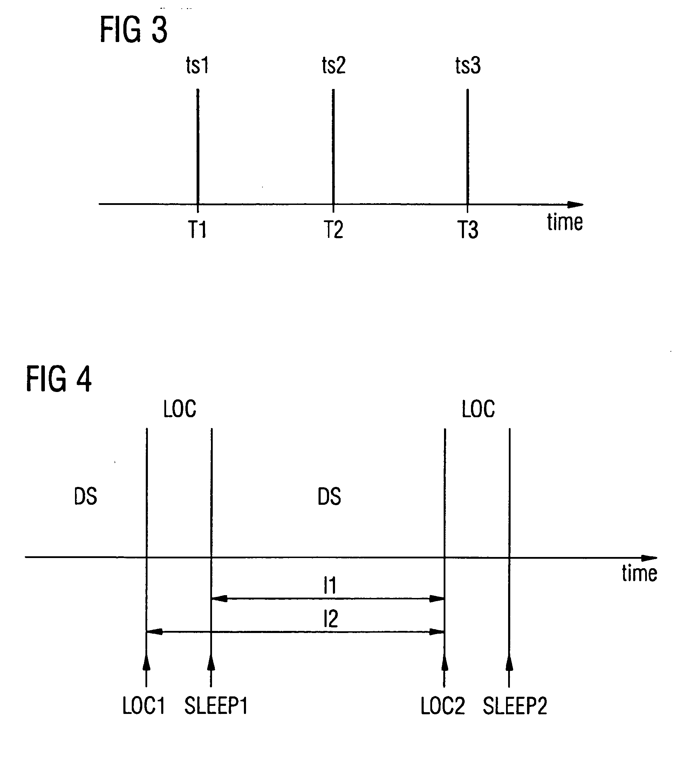

The time of arrival is preferably obtained in reference to a timer of the mobile equipment 103. This principle will be discussed in more detail below with reference to Figure 3.

Step J5 may include the mobile equipment 103 locking to and decoding of a base station in question.

In step J7, the processor 205 of the mobile equipment 103 generates a locationing request REQ which comprises not only information derived from the at least two measured time of arrivals (T1, T2, T3, ...), but also an identifier identifying the mobile equipment 103 or the subscriber module 211 therein. Examples of such identifiers include above mentioned IMEI and IMSI.

After generating the locationing request REQ, the transmitting means 207 of the mobile equipment 103 transmits it to the base station BS which, responsively to the header part comprised in the locationing request REQ, routes it further over the cellular network 100 to LCS 105 which receives it through its receiving means 501.

In step K1, the means 503 for determining the geographical location COORD LCS 105 determines the geographical location COORD of the mobile equipment 103. The determination of the geographical location COORD may use any known methods but when performing the determination, information derived from at least two time of arrival T1, T2, T3, ... is used. Such methods may include so-called Observed Time Difference OTD and Enhanced OTD E-OTD. OTD or E-OTD may comprise computing a time differences from observed time of arrivals T1, T2, T3, and so forth. These time differences may be computed either in the LCS 105 or in the mobile equipment 103.

Responsive to the identifier identifying the mobile equipment 103 or the subscriber module 211 therein, the selecting means 505 of the LCS 105 selects a network element 107 to which it sends information derived the geographical location COORD. Examples of such identifiers include above mentioned IMEI and IMSI. Possible mappings therefore include, when IMSI is used, a mapping of country or country + network operator field(s) in the IMSI to a network address with which the network element 107 is addressable. When IMEI is used, the mapping may comprise a mapping between the manufacturer or the manufacturer + model field in the IMEI to a network address with which the network element 107 is addressable.

After finding the geographical location COORD, the transmitting means 507 of the LCS 105 forwards information derived the geographical information COORD to network unit 107 selected.

Figure 3 shows examples of timing signals and time of arrival related thereto. At time T1 the mobile equipment 103 receives timing signal *ts1*, at time T2 timing signal *ts2,* and at time T3 timing signal *ts3.* The timing signals *ts1*, *ts2, ts3* come from different base stations BS, BS2, BS3, ... of the cellular network 100. Each time T1, T2, T3, ... correspond thus to time of arrival for the respective timing signal *ts1*, *ts2, ts3.* Because of the available timer, the processor 205 can store the times of arrival T1, T2, T3, ... in the register 203 or in its own register.

Logging on to or off from the cellular network 100 takes time and consumes energy which may be critical in some occasions, e.g. whenever person is lost. By using the schema as discussed above, the logging on to or off from the cellular network 100 can be avoided.

Figure 4 illustrates operation of the mobile equipment 103. The mobile equipment 103, initially being in deep-sleep state, wakes up at time LOC1. It performs a measurement and sends a locationing request, and after sending the locationing request falls back to the deep-sleep state SLEEP1. After at time LOC2, corresponding to a predetermined time *11* or *12* as measured from LOC1 or SLEEP1, respectively, the mobile equipment 103 wakes up, performs a measurement and sends a locationing request. At time SLEEP2 it falls back to the deep-sleep state. In other words, the deep-sleep state of the mobile equipment 103 can be deactivated and activated repetitively.

## Claims

1. A system (105) for receiving a locationing request (REQ), comprising:
- means (501) for receiving a locationing request (REQ) comprising information (MEAS) derived from at least two time of arrival (T1; T2; T3) measurements performed in a device (103) for making a locationing request (REQ), and an identifier (IMEI; IMSI) identifying the device (103) making the locationing request (REQ) or a subscriber module (211) in the device (103) making the locationing request (REQ);
- means (503) for determining the location (COORD) of the device (103) making the locationing request (REQ), adapted to use information (MEAS) received in the locationing request (REQ);
- means (505) for selecting a network element (107) responsively to the identifier (IMEI; IMSI) identifying the device (103) making the locationing request (REQ) or the subscriber module (211) in the device (103) making the locationing request (REQ); and
- means (507) for forwarding information derived from the determined location (COORD) to the selected network element (107),
**characterized in that**:
the means (505) for selecting a network element (107) are adapted to select the address of the selected network element (107):
- if the identifier (IMEI) is an International Mobile Equipment Identifier, based on the device manufacturer or device type or both; or
- if the identifier (IMSI) is an International Mobile Subscriber Identifier, the address of the selected network element (107) is selected based on the country of the subscriber.

## Patentansprüche

1. System (105) zum Empfangen einer Positionsanforderung (REQ), umfassend:
- Mittel (501) zum Empfangen einer Positionsanforderung (REQ), die folgendes umfaßt: Informationen (MEAS), die aus mindestens zwei Messungen der Ankunftszeit (T1; T2; T3) abgeleitet werden, die in einer Einrichtung (103) durchgeführt werden, um eine Positionsanforderung (REQ) durchzuführen, und eine Kennung (IMEI; IMSI), die die Einrichtung (103), die die Positionsanforderung (REQ) durchführt, oder ein Teilnehmermodul (211) in der die Positionsanforderung (REQ) durchführenden Einrichtung (103) identifiziert;
- Mittel (503) zum Bestimmen des Standorts (COORD) der Einrichtung (103), die die Positionsanforderung (REQ) durchführt, die so ausgelegt sind, daß sie in der Positionsanforderung (REQ) empfangene Informationen (MEAS) benutzen;
- Mittel (505) zum Auswählen eines Netzwerkelements (107) als Reaktion auf die Kennung (IMEI; IMSI), die die Einrichtung (103), die die Positionsanforderung (REQ) durchführt, oder das Teilnehmermodul (211) in der die Positionsanforderung (REQ) durchführenden Einrichtung (103), identifiziert; und
- Mittel (507) zum Weiterleiten von aus dem bestimmten Standort (COORD) abgeleiteten Informationen zu dem gewählten Netzwerkelement (107);
**dadurch gekennzeichnet, daß**
die Mittel (505) zum Auswählen eines Netzwerkelements (107) so ausgelegt sind, daß sie die Adresse des gewählten Netzwerkelements (107) folgendermaßen auswählen:
- wenn die Kennung (IMEI) eine internationale Mobilgerätekennung ist, auf der Basis des Geräteherstellers oder Gerätetyps oder von beiden; oder
- wenn die Kennung (IMSI) eine internationale Mobilteilnehmerkennung ist, wird die Adresse des gewählten Netzwerkelements (107) auf der Basis des Lands des Teilnehmers ausgewählt.

## Revendications

1. Système (105) pour recevoir une demande (REQ) de localisation, comprenant :
- des moyens (501) pour recevoir une demande (REQ) de localisation comprenant des informations (MEAS) dérivant d'au moins deux mesures de temps d'arrivée (T1 ; T2 ; T3) effectuées dans un dispositif (103) destiné à effectuer une demande (REQ) de localisation, et un identificateur (IMEI ; IMSI) identifiant le dispositif (103) effectuant la demande de localisation (REQ) ou un module (211) d'abonné dans le dispositif (103) effectuant la demande (REQ) de localisation ;
- des moyens (503) pour déterminer la position (COORD) du dispositif (103) effectuant la demande (REQ) de localisation, conçus pour utiliser des informations (MEAS) reçues dans la demande (REQ) de localisation ;
- des moyens (505) pour sélectionner un élément (107) du réseau en réponse à l'identificateur (IMEI ; IMSI) identifiant le dispositif (103) effectuant la demande (REQ) de localisation ou le module (211) d'abonné dans le dispositif (103) effectuant la demande (REQ) de localisation ; et
- des moyens (507) pour réexpédier des informations déterminées à partir de la position (COORD) à l'élément (107) du réseau,
**caractérisé en ce que** :
les moyens (505) destinés à sélectionner un élément (107) du réseau sont conçus pour sélectionner l'adresse de l'élément (107) sélectionné du réseau :
- si l'identificateur (IMEI) est un Identificateur International d'Équipement Mobile, sur la base du fabricant du dispositif ou du type de dispositif ou des deux ; ou
- si l'identificateur (IMSI) est un Identificateur International d'Abonné Mobile, l'adresse de l'élément (107) sélectionné du réseau est sélectionnée sur la base du pays de l'abonné.
